# EUROPÄISCHE PATENTANMELDUNG

(11) **EP 1 462 044 A2**
(43) Veröffentlichungstag der Anmeldung: **29.09.2004**
(21) Anmeldenummer: 04002732.8
(22) Anmeldetag: 07.02.2004
(51) Int. Cl.: A47J 37/07

(54) **Zerlegbarer Grill**

(30) Priorität: 19.05.2003 DE 10322434
(71) Anmelder: Geng, Thomas, 73734 Esslingen (DE)
(72) Erfinder: Geng, Thomas, 73734 Esslingen (DE)

(57) **Zusammenfassung**

Es wird ein zerlegbarer Grill mit einer Rosthalteeinrichtung (1) angegeben, welche mit einer stangenförmigen Halterung (2) verbindbar ausgebildet ist, wobei ein mit der Rosthalteeinrichtung (1) verbindbarer Rost (3) vorgesehen ist, welcher durch ein erstes stabförmiges Seitenteil (4) und ein zweites stabförmiges Seitenteil (5) und durch eine Vielzahl zwischen dem ersten stabförmigen Seitenteil (4) und dem zweiten stabförmigen Seitenteil (5) angeordneten Stäben (6) gebildet ist, wobei die Stäbe (6) mit dem ersten stabförmigen Seitenteil (4) und mit dem zweiten stabförmigen Seitenteil (5) lösbar verbunden sind. Zur Gewichtseinsparung und zur Platzeinsparung im zerlegten Zustand des Grills sowie zur einfachen und effizienten Reinigung des Grills weist das erste stabförmige Seitenteil (4) und das zweite stabförmige Seitenteil (5) jeweils eine Vielzahl an Sacklöchern zur Aufnahme zumindest eines Teils der Stäbe (6) auf, wobei bei mindestens einem Teil der Sacklöcher des ersten stabförmigen Seitenteils (4) und/oder des zweiten stabförmigen Seitenteils (5) eine Ausnehmung vorgesehen ist, welche die Sacklöcher an deren Eingang teilweise öffnet. Alternativ dazu weisen das erste stabförmige Seitenteil (4) und das zweite stabförmige Seitenteil (5) jeweils ein Hohlprofil auf, wobei das erste stabförmige Seitenteil (4) und das zweite stabförmige Seitenteil (5) dann jeweils eine Vielzahl an ersten Löchern von der Aussenwand in den Innenbereich des Hohlprofils zur Aufnahme zumindest eines Teils der Stäbe (6) aufweist und bei mindestens einem Teil der ersten Löcher des ersten stabförmigen Seitenteils (4) und/oder des zweiten stabförmigen Seitenteils (5) eine Ausnehmung vorgesehen ist, welche die ersten Löcher an der Aussenwand teilweise öffnet.

## Beschreibung

### Technisches Gebiet

Die Erfindung bezieht sich auf das Gebiet der Grill- und Brateinrichtungen. Sie geht aus von einem zerlegbaren Grill gemäss dem Oberbegriff der unabhängigen Ansprüche.

### Stand der Technik

Derzeit ist eine Fülle von Grills für verschiedenste Anwendungen bekannt. Gerade im Outdoor-Bereich ist es wichtig, dass ein Grill möglichst zerlegbar ist, um möglichst platzsparend transportiert werden zu können, und dass ein Grill möglichst leicht ist, so dass beispielsweise auch ein Wanderer einen solchen Grill für längere Zeit tragen kann. Ein derartiger zerlegbarer Grill ist beispielsweise aus "Lauche & Maas, Beratungskatalog, S. 208, 21.04.2002" bekannt. Dieser zerlegbare Grill umfasst eine Rosthalteeinrichtung, welche mit einer stangenförmigen Halterung verbindbar ausgebildet ist. Die stangenförmige Halterung ist zweiteilig ausgeführt, wobei die beiden Teile durch Verschrauben über Gewinde verbindbar sind. Die stangenförmige Halterung ist durch Einstecken in einer Bodenfläche fixierbar. Desweiteren weist der Grill einen mit der Rosthalteeinrichtung verbindbaren Rost auf, welcher durch ein erstes stabförmiges Seitenteil und ein zweites stabförmiges Seitenteil und durch eine Vielzahl zwischen dem ersten stabförmigen Seitenteil und dem zweiten stabförmigen Seitenteil angeordneten Stäben gebildet ist. Die Stäbe sind im wesentlichen senkrecht zum ersten und zweiten stabförmigen Seitenteil angeordnet und mit dem ersten stabförmigen Seitenteil und mit dem zweiten stabförmigen Seitenteil verschweisst oder verlötet, so dass zwischen den Stäben und dem ersten und zweiten stabförmigen Seitenteil eine unlösbare Verbindung besteht.

In der DE 102 11 628 A1 ist weiterhin ein zerlegbarer Rost für einen Grill angegeben, wobei der Rost durch ein erstes stabförmiges Seitenteil und ein zweites stabförmiges Seitenteil und durch eine Vielzahl zwischen dem ersten stabförmigen Seitenteil und dem zweiten stabförmigen Seitenteil angeordneten Stäben gebildet ist. Die Stäbe sind dabei mit dem ersten stabförmigen Seitenteil und mit dem zweiten stabförmigen Seitenteil lösbar verbunden. Das erste und das zweite stabförmige Seitenteil ist aus einem Vollmaterial gefertigt und weist jeweils eine Vielzahl an Sacklöchern zur Aufnahme zumindest eines Teils der Stäbe auf. Ferner umfasst das erste stabförmige Seitenteil und das zweite stabförmige Seitenteil jeweils ein oder mehrere durchgehende Löcher zur Durchführung eines Stabes, wobei der Stab im zusammengebauten Zustand des Rostes an seinen Enden mit Verriegelungselementen verbunden ist, um ein Auseinanderschieben der restlichen Stäbe, insbesondere der in den Sacklöchern, zu verhindern.

Problematisch bei einem vorstehend beschriebenen zerlegbaren Grill ist, dass sich der Zusammenbau des Rostes als sehr schwierig und zeitraubend gestaltet, da sich die Stäbe nur schwierig in die Sacklöcher und in das oder die durchgehenden Löcher des ersten stabförmigen Seitenteils und dann nachfolgend noch in die Sacklöcher und in das oder die durchgehenden Löcher des zweiten stabförmigen Seitenteils einführen lassen. Die Folge ist ein ständiges Verkannten der Stäbe bei deren Einführung in die entsprechenden Löcher, oder dass sich ein Teil der Stäbe erst gar nicht einführen lassen und ständig herausfallen. Dies ist aber gerade bei Anwendern solcher zerlegbarer Grills, d.h. vor allem bei Wanderern, Kletterern, Fahrrad- oder Motorradtourenfahrern, nicht erwünscht, da es bei deren Anwendungen sehr häufig auf einen einfachen und schnellen Zusammenbau des zerlegbaren Grills ankommt. Weiterhin weist der Rost durch die Fertigung der beiden stabförmigen Seitenteile aus einem Vollmaterial ein erhebliches Gewicht auf, was ebenfalls bei den vorstehend erwähnten Anwendern wenig erwünscht ist.

### Darstellung der Erfindung

Aufgabe der Erfindung ist es deshalb, einen zerlegbaren Grill derart weiterzuentwickeln, dass der Grill einfach und schnell zusammengebaut werden kann und zudem ein geringes Gewicht aufweist. Diese Aufgabe wird durch Merkmale des Anspruchs 1 beziehungsweise des Anspruchs 2 gelöst. In den abhängigen Ansprüchen sind vorteilhafte Weiterbildungen der Erfindung angegeben.

Der erfindungsgemässe zerlegbare Grill weist eine Rosthalteeinrichtung auf, welche mit einer stangenförmigen Halterung verbindbar ausgebildet ist. Weiterhin umfasst der zerlegbare Grill einen mit der Rosthalteeinrichtung verbindbaren Rost, welcher durch ein erstes stabförmiges Seitenteil und ein zweites stabförmiges Seitenteil und durch eine Vielzahl zwischen dem ersten stabförmigen Seitenteil und dem zweiten stabförmigen Seitenteil angeordneten Stäben gebildet ist, wobei die Stäbe mit dem ersten stabförmigen Seitenteil und mit dem zweiten stabförmigen Seitenteil lösbar verbunden sind. Erfindungsgemäss weist das erste stabförmige Seitenteil und das zweite stabförmige Seitenteil jeweils eine Vielzahl an Sacklöchern zur Aufnahme zumindest eines Teils der Stäbe auf, wobei bei mindestens einem Teil der Sacklöcher des ersten stabförmigen Seitenteils und/oder des zweiten stabförmigen Seitenteils eine Ausnehmung vorgesehen ist, welche die Sacklöcher an deren Eingang teilweise öffnet. Alternativ dazu weisen das erste stabförmige Seitenteil und das zweite stabförmige Seitenteil jeweils ein Hohlprofil auf, wobei das erste stabförmige Seitenteil und das zweite stabförmige Seitenteil dann jeweils eine Vielzahl an ersten Löchern von der Aussenwand in den Innenbereich des Hohlprofils zur Aufnahme zumindest eines Teils der Stäbe aufweist und bei mindestens einem Teil der ersten Löcher des ersten stabförmigen Seitenteils und/oder des zweiten stabförmigen Seitenteils eine Ausnehmung vorgesehen ist, welche die ersten Löcher an der Aussenwand teilweise öffnet.

Beim Zusammenbau des erfindungsgemässen Grills, insbesondere des Rostes, lassen sich die Stäbe in die entsprechenden Sacklöcher beziehungsweise ersten Löcher des ersten stabförmigen Seitenteils und dann nachfolgend noch in die entsprechenden Sacklöcher beziehungsweise ersten Löcher des zweiten stabförmigen Seitenteils mittels der Ausnehmung vorteilhaft problemlos und schnell einführen, wobei die Ausnehmung eine Führungsfunktion der Stäbe übernimmt. Ein Verkannten der Stäbe bei deren Einführung in die entsprechenden Sacklöcher beziehungsweise ersten Löcher oder ein unmögliches Einführen eines Teiles der Stäbe und ein ständiges Herausfallen kann dadurch vorteilhaft vermieden werden. Darüber hinaus kann durch die Ausnehmung vorteilhaft Material und Gewicht gespart werden.

Durch die lösbare Verbindung der Stäbe mit dem ersten und zweiten stabförmigen Seitenteil ist der Rost zudem komplett zerlegbar, so dass im zerlegten Zustand des erfindungsgemässen zerlegbaren Grills erheblich Platz eingespart werden kann. Ferner lässt sich der Rost und damit der erfindungsgemässe Grill aufgrund der vorstehend erläuterten Zerlegbarkeit des Rostes sehr einfach, schnell und damit effizient reinigen.

Diese und weitere Aufgaben, Vorteile und Merkmale der vorliegenden Erfindung werden aus der nachfolgenden detaillierten Beschreibung bevorzugter Ausführungsformen der Erfindung in Verbindung mit der Zeichnung offensichtlich.

### Kurze Beschreibung der Zeichnungen

Es zeigen:
- Fig. 1: eine Seitenansicht des erfindungsgemässen zerlegbaren Grills,
- Fig. 2: eine Aufsicht des erfindungsgemässen zerlegbaren Grills,
- Fig. 2a: eine Seitenansicht und einer Aufsicht einer ersten Ausführungsform einer Rosthalteeinrichtung des erfindungsgemässen zerlegbaren Grills,
- Fig.2b: eine Seitenansicht und einer Aufsicht einer zweiten Ausführungsform einer Rosthalteeinrichtung des erfindungsgemässen zerlegbaren Grills,
- Fig. 3a: eine räumliche Darstellung eines ersten stabförmigen Seitenteils einer ersten Ausführungsform eines Rostes des erfindungsgemässen zerlegbaren Grills,
- Fig. 3b: eine Schnittdarstellung entlang der Linie a-a der Darstellung gemäss Fig. 3a,
- Fig. 4a: eine räumliche Darstellung des ersten stabförmigen Seitenteils einer zweiten Ausführungsform des Rostes des erfindungsgemässen zerlegbaren Grills,
- Fig. 4b: eine Schnittdarstellung entlang der Linie a-a der Darstellung gemäss Fig. 4a,
- Fig. 5: eine Aufsicht einer dritten Ausführungsform des Rostes des erfindungsgemässen zerlegbaren Grills,
- Fig. 5a: eine Schnittdarstellung entlang der Linie b-b der Aufsicht gemäss Fig. 5,
- Fig. 5b: eine Schnittdarstellung entlang der Linie a-a der Aufsicht gemäss Fig. 5,
- Fig. 5c: eine Schnittdarstellung entlang der Linie c-c der Aufsicht gemäss Fig. 5 und
- Fig. 6: eine räumliche Darstellung eines zweiten stabförmigen Seitenteils einer vierten Ausführungsform des Rostes des erfindungsgemässen zerlegbaren Grills,

Die in der Zeichnung verwendeten Bezugszeichen und deren Bedeutung sind in der Bezugszeichenliste zusammengefasst aufgelistet. Grundsätzlich sind in den Figuren gleiche Teile mit gleichen Bezugszeichen versehen. Die beschriebenen Ausführungsformen stehen beispielhaft für den Erfindungsgegenstand und haben keine beschränkende Wirkung.

### Wege zur Ausführung der Erfindung

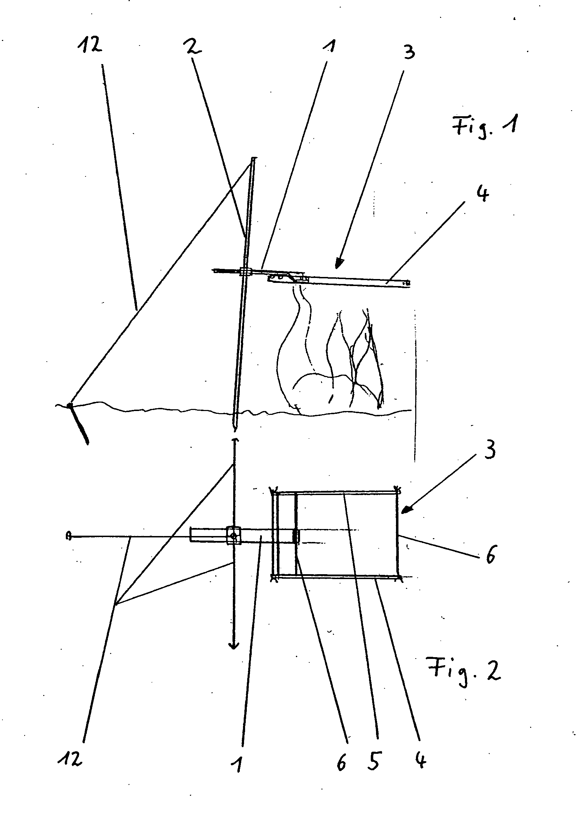

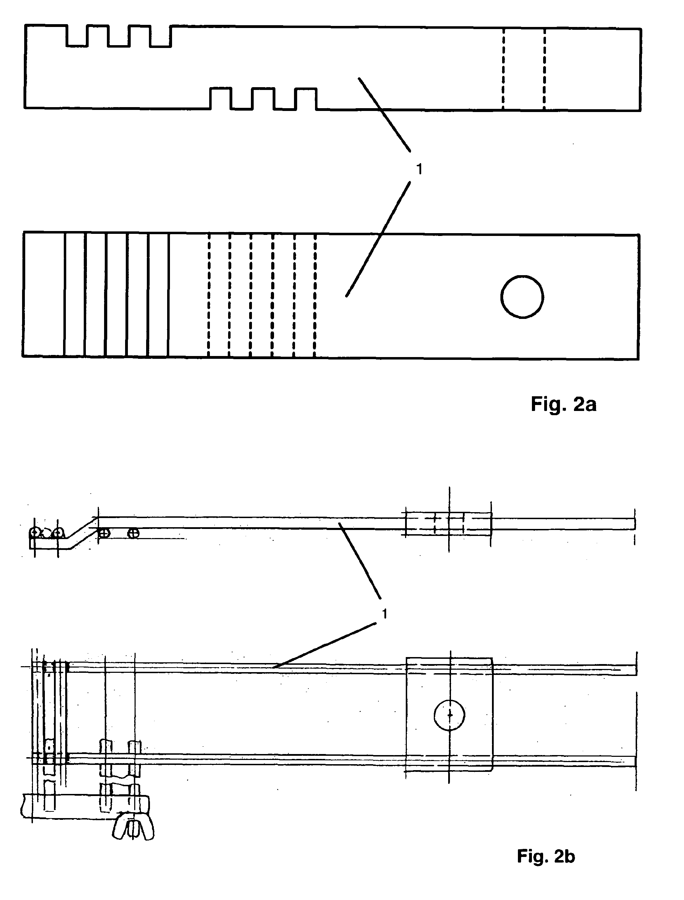

In Fig. 1 ist eine Seitenansicht des erfindungsgemässen zerlegbaren Grills gezeigt. In Fig. 2 ist zudem eine Aufsicht des erfindungsgemässen zerlegbaren Grills dargestellt. Gemäss Fig. 1 und Fig. 2 weist der zerlegbare Grill eine Rosthalteeinrichtung 1 auf, welche mit einer stangenförmigen Halterung 2 verbindbar ausgebildet ist. Ferner umfasst der Grill einen mit der Rosthalteeinrichtung 1 verbindbaren Rost 3, welcher durch ein erstes stabförmiges Seitenteil 4 und ein zweites stabförmiges Seitenteil 5 und durch eine Vielzahl zwischen dem ersten stabförmigen Seitenteil 4 und dem zweiten stabförmigen Seitenteil 5 angeordneten Stäben 6 gebildet ist. Die Stäbe 6 sind mit dem ersten stabförmigen Seitenteil 4 und mit dem zweiten stabförmigen Seitenteil 5 vorteilhaft lösbar verbunden. Die Rosthalteeinrichtung 1 ist im zusammengebauten Zustand des Grills mit der stangenförmigen Halterung 2 durch selbstarretierende Klemmung, hervorgerufen durch verkanten der Rosthalteeinrichtung 1 an der stangenförmigen Halterung 2 infolge ungleicher Gewichtsverteilung, verbunden und entlang der stangenförmigen Halterung 2 verschiebbar. Weiterhin greift die Rosthalteeinrichtung 1 im zusammengebauten Zustand des Grills in eine gewisse Anzahl der Stäbe 6 des Rostes 3 und hält den Rost 3 im wesentlichen vertikal auf einer gewünschten Distanz von einem unter Rost 3 entzündeten Grillfeuer. Der Rost 3 ist somit durch die Rosthalteeinrichtung 1 gemäss Fig. 1 vorteilhaft stufenlos in der Höhe über dem Grillfeuer verschiebbar. Es hat sich als besonders vorteilhaft erwiesen, die Rosthalteeinrichtung 1 zur Reinigung der Stäbe 6 nach dem Grillen zu verwenden. Dazu ist die Rosthalteeinrichtung 1 zunächst von der stangenförmigen Halterung 2 zu entfernen. Danach ist die Rosthalteeinrichtung 1 derart anzubringen, dass diese in mindestens einen Stab 6 eingreift. Durch einfaches Hin- und Herbewegen der Rosthalteeinrichtung 1 entlang der entsprechenden Stäbe 6 lässt sich dann der Rost 3, insbesondere die Stäbe 6 in besonders einfacher Weise reinigen. Der Vorgang ist für sämtliche Stäbe 6 zu wiederholen. In Fig. 2a ist eine Seitenansicht und eine Aufsicht einer ersten Ausführungsform der Rosthalteeinrichtung 1 gezeigt. Die Rosthalteeinrichtung 1 weist darin vorzugsweise ein Hohlprofil auf und ist als Aufnahmevorrichtung der Stäbe 6 im zerlegten Zustand des Rostes 3 ausgebildet. Dadurch kann im zerlegten Zustand des Rostes 3 und damit des Grills, beispielsweise beim Transport, Platz eingespart werden, wobei die Stäbe 6 im Innenbereich des Hohlprofils der Rosthalteeinrichtung 1 aufbewahrt werden. Ein Teil der Stäbe 6 weist, wie später noch detailliert erläutert, an seinen Enden jeweils ein Gewinde 9 auf. Werden nun sämtliche Stäbe 6 zur Aufbewahrung in den Innenbereich des Hohlprofils der Rosthalteeinrichtung 1 eingeführt, so kann durch Aufschrauben einer Schraubenmutter, Rändelmutter einer Flügelmutter auf das jeweilige Gewinde 9 der Stäbe 6 mit den Gewinden 9 an den Enden vorteilhaft erreicht werden, dass sämtliche Stäbe 6 nicht aus dem Innenbereich des Hohlprofils der Rosthalteeinrichtung 1 herausfallen können und somit gegen Verlieren geschützt sind.

In Fig. 2b ist eine Seitenansicht und eine Aufsicht einer zweiten Ausführungsform der Rosthalteeinrichtung 1 dargestellt. Die Rosthalteeinrichtung gemäss Fig. 2b ist durch Draht oder Stangen und einem Aluminiumteil in der in Fig. 2b gezeigten Weise ausgeführt und kennzeichnet sich somit durch ein sehr kleines Gewicht.

Vorzugsweise ist die stangenförmige Halterung 2 mindestens zweiteilig ausgebildet, wobei die Teile der stangenförmigen Halterung 2 durch Stecken verbindbar sind. Damit ist eine einfache stabile Verbindung der Teile beim Zusammenstecken zu der kompletten stangenförmigen Halterung 2 erzielbar, welche gegenüber einer üblichen Gewindeverbindung zudem den Vorteil aufweist, dass sie weniger anfällig bei Verschmutzung ist. Mit Vorteil weisen die Teile der stangenförmigen Halterung 2 jeweils ein Hohlprofil mit einem kreisförmigen Querschnitt auf, wodurch die stangenförmige Halterung 2 sehr stabil ist, dennoch Gewicht eingespart werden kann und sich die Teile der stangenförmigen Halterung 2 sehr leicht von Verschmutzung beispielsweise durch Erde reinigen lassen. Zudem kann die Rosthalteeinrichtung 1 und somit der Grill bei Bedarf, z. B. zur Bestückung oder Entnahme des Grillgutes, vorteilhaft vom Feuer gedreht werden. Vorzugsweise bestehen die Teile der stangenförmigen Halterung 2 aus Aluminium oder aus einer Aluminiumlegierung, wodurch weiter Gewicht eingespart werden kann. Gemäss Fig. 1 und Fig. 2 ist die stangenförmige Halterung 2 durch eine Abspannanordnung 12 bezüglich einer Bodenoberfläche fixierbar ausgebildet. Die Abspannanordnung 12 ist gemäss Fig. 2 im zusammengebauten Zustand des Grills durch drei Seile gebildet, welche jeweils mit einem Ende im wesentlichen an einem Punkt der stangenförmigen Halterung 2 angreifen und mit dem jeweiligen anderen Ende an der Bodenfläche fixiert sind. Als Fixierung kann eine handelsübliche Bodenverankerung wie beispielsweise ein Hering oder aber auch ein Stein dienen. Vorteilhaft ist es durch die Abspannanordnung nicht unbedingt notwendig, die stangenförmige Halterung 2 selbst tief im Boden zu verankern, wie bei gängigen zerlegbaren Grills üblich. Somit kann die stangenförmige Halterung 2 des erfindungsgemässen zerlegbaren Grills mittels der Abspannanordnung 12 vorteilhaft auch bezüglich einer beispielsweise steinigen, felsigen oder asphaltierten Bodenoberfläche fixiert werden, bei welcher die stangenförmigen Halterung 2 selbst nicht oder zumindest nur mit grossem Aufwand im Boden verankerbar ist.

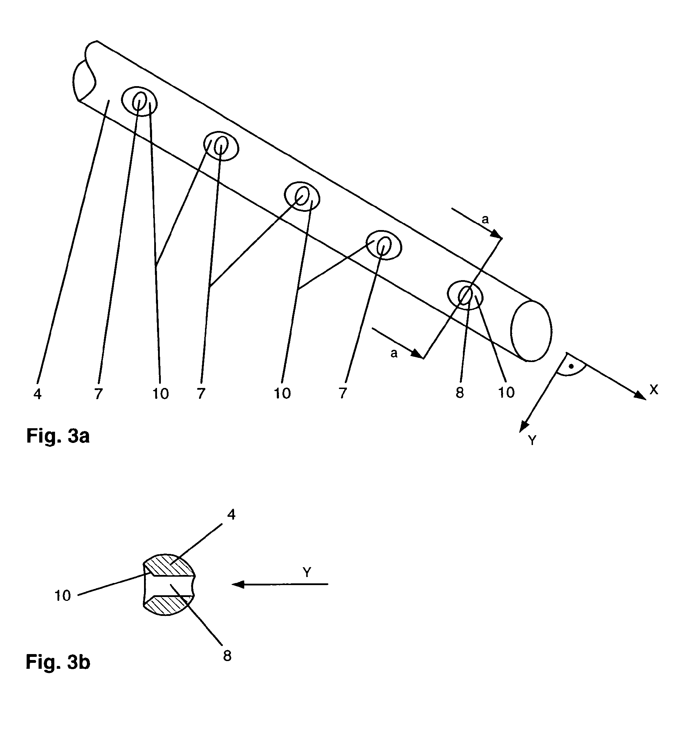

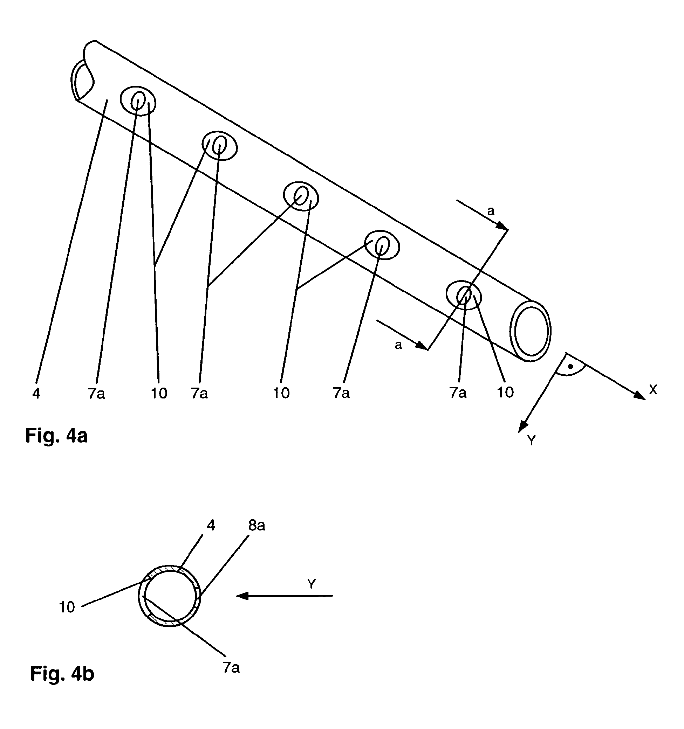

In Fig. 3a ist nun eine räumliche Darstellung des ersten stabförmigen Seitenteils 4 einer ersten Ausführungsform des Rostes 3 des erfindungsgemässen zerlegbaren Grills gezeigt. Weiterhin zeigt Fig. 3b eine Schnittdarstellung entlang der Linie a-a der Darstellung gemäss Fig. 3a. Gemäss Fig. 3a ist das erste stabförmige Seitenteil 4 und allgemein auch das zweite stabförmige Seitenteil 5 aus einem Vollmaterial gefertigt und weist erfindungsgemäss jeweils eine Vielzahl an Sacklöchern 7 zur Aufnahme zumindest eines Teils der Stäbe 6 auf, wobei bei mindestens einem Teil der Sacklöcher 7 des ersten stabförmigen Seitenteils 4 und/oder des zweiten stabförmigen Seitenteils 5 eine Ausnehmung 10 vorgesehen ist, welche die Sacklöcher 7 an deren Eingang teilweise öffnet. Als Alternative zu Fig. 3a und Fig. 3b ist in Fig. 4a eine räumliche Darstellung des ersten stabförmigen Seitenteils 4 einer zweiten Ausführungsform des Rostes 3 des erfindungsgemässen zerlegbaren Grills gezeigt, wobei Fig. 4b eine Schnittdarstellung entlang der Linie a-a der Darstellung gemäss Fig. 4a zeigt. Gemäss Fig. 4a weist nun das erste stabförmige Seitenteil 4 und allgemein auch das zweite stabförmige Seitenteil 5 alternativ zu Fig. 3a jeweils ein Hohlprofil auf, wobei das erste stabförmige Seitenteil 4 und das zweite stabförmige Seitenteil 5 jeweils eine Vielzahl an ersten Löchern 7a durch die Aussenwand in den Innenbereich des Hohlprofils zur Aufnahme zumindest eines Teils der Stäbe 6 aufweist und bei mindestens einem Teil der ersten Löcher 7a des ersten stabförmigen Seitenteils 4 und/oder des zweiten stabförmigen Seitenteils 5 eine Ausnehmung 10 vorgesehen ist, welche die ersten Löcher 7a an der Aussenwand teilweise öffnet.

Beim Zusammenbau des erfindungsgemässen Grills, insbesondere des Rostes 3, lassen sich die Stäbe 6 in die entsprechenden Sacklöcher 7 beziehungsweise ersten Löcher 7a des ersten stabförmigen Seitenteils 4 und dann nachfolgend noch in die entsprechenden Sacklöcher 7 beziehungsweise ersten Löcher 7a des zweiten stabförmigen Seitenteils mittels der Ausnehmung 10 vorteilhaft problemlos und schnell einführen, wobei die Ausnehmung 10 eine Führungsfunktion der Stäbe 6 übernimmt. Ein Verkannten der Stäbe 6 bei deren Einführung in die entsprechenden Sacklöcher 7 beziehungsweise ersten Löcher 7a oder ein unmögliches Einführen eines Teiles der Stäbe 6 und ein ständiges Herausfallen kann dadurch vorteilhaft vermieden werden. Darüber hinaus kann durch die Ausnehmung 10 vorteilhaft Material und Gewicht gespart werden. Darüber hinaus kann durch das Hohlprofil des ersten und zweiten stabförmigen Seitenteils 4, 5 gemäss Fig. 4a, 4b mit Vorteil zusätzliches Gewicht gegenüber des ersten und zweiten stabförmigen Seitenteils 4, 5 gemäss Fig. 3a, 3b eingespart werden, wobei das Hohlprofil besonders vorteilhaft einen kreisförmigen Querschnitt aufweist. Es ist aber auch denkbar, dass jegliche Art von Querschnitten, wie beispielsweise elliptische aber auch dreieckige, rechteckige, quadratische oder allgemein vieleckige Querschnitte zum Einsatz kommen. Es sei darauf hingewiesen, dass eine vorteilhafte allgemeine Gewichtseinsparung des erfindungsgemässen zerlegbaren Grills dadurch erreicht werden kann, dass das erste stabförmige Seitenteil 4 und das zweite stabförmige Seitenteil 5 vorzugsweise einen kreisförmigen Querschnitt aufweist, wobei die bereits angesprochenen dreieckigen, rechteckigen, quadratischen oder allgemein vieleckigen Querschnitte ebenfalls denkbar sind.

In die Sacklöcher 7 gemäss Fig. 3a, 3b beziehungsweise in die ersten Löcher 7a gemäss Fig. 4a, 4b sind die Stäbe 6 des Rostes 3 einsteckbar. Dadurch besteht die Möglichkeit, die Anzahl von Stäben 6, welche zur Bildung des Rostes 3 in die vorgesehenen Sacklöcher 7 beziehungsweise ersten Löcher 7a einsteckbar sind, individuell zu wählen. Beispielsweise bei grösserem auf den Rost 3 aufzulegendem Bratgut oder bei Einsatz des Rostes 3 als Topfoder Bratpfannenauflage ist nur eine geringe Anzahl an Stäben 6 zur Bildung des Rostes erforderlich, so dass demnach weiter Gewicht nach individuellem Bedarf eingespart werden kann.

Gemäss Fig. 3a, 3b sowie Fig. 4a, 4b erstrecken sich die Sacklöcher 7 beziehungsweise die ersten Löcher 7a des ersten stabförmigen Seitenteils 4 im wesentlichen senkrecht zur Längsausdehnungsrichtung X des ersten stabförmigen Seitenteils 4. Weiterhin erstrecken sich die Sacklöcher 7 beziehungsweise die ersten Löcher 7a des zweiten stabförmigen Seitenteils 5 im wesentlichen senkrecht zur Längsausdehnungsrichtung X des zweiten stabförmigen Seitenteils 5, wobei die Sacklöcher 7 beziehungsweise die ersten Löcher 7a des ersten stabförmigen Seitenteils 4 und des zweiten stabförmigen Seitenteils 5 jeweils in einer Reihe angeordnet sind. Vorzugsweise sind die Sacklöcher 7 bei dem ersten stabförmigen Seitenteil 4 gemäss Fig. 3a und allgemein auch beim zweiten stabförmigen Seitenteil 5 beziehungsweise die ersten Löcher 7a des ersten stabförmigen Seitenteils 4 gemäss Fig. 4a und allgemein auch beim zweiten stabförmigen Seitenteil 5 in gleicher Weise äquidistant beabstandet, so dass ein in ein Sackloch 7 beziehungsweise erstes Loch 7a des ersten stabförmigen Seitenteils 4 und in ein Sackloch 7 beziehungsweise erstes Loch 7a des zweiten stabförmigen Seitenteils 5 einzusteckender Stab 6 nicht verkantet. Weiterhin weisen die Sacklöcher 7 der beiden stabförmigen Seitenteile 4, 5 im wesentlichen dieselbe Sacklochtiefe auf, wodurch sich die Fertigung beziehungsweise Herstellung vereinfacht.

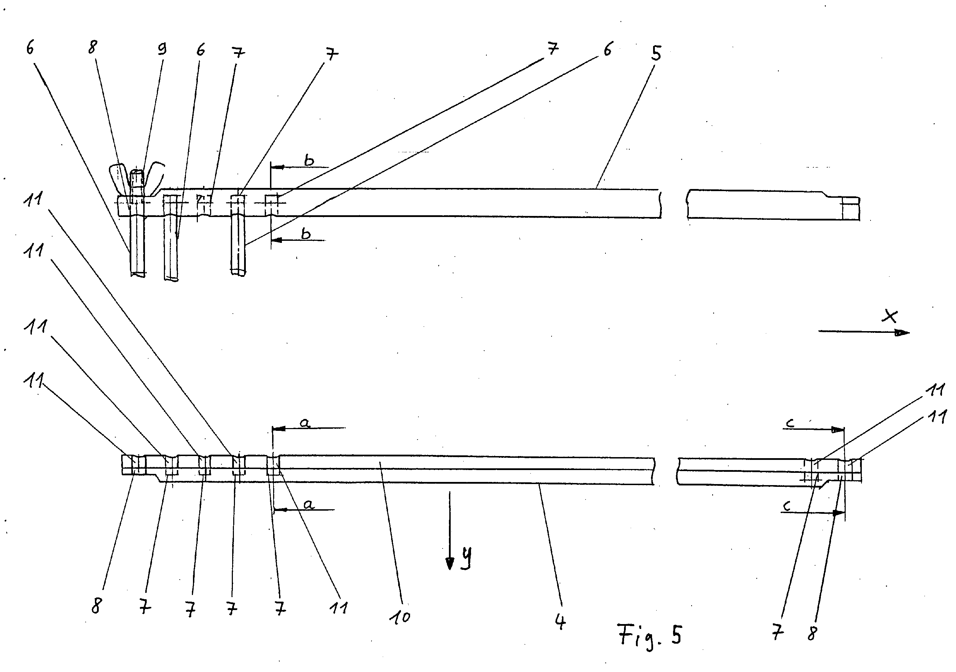

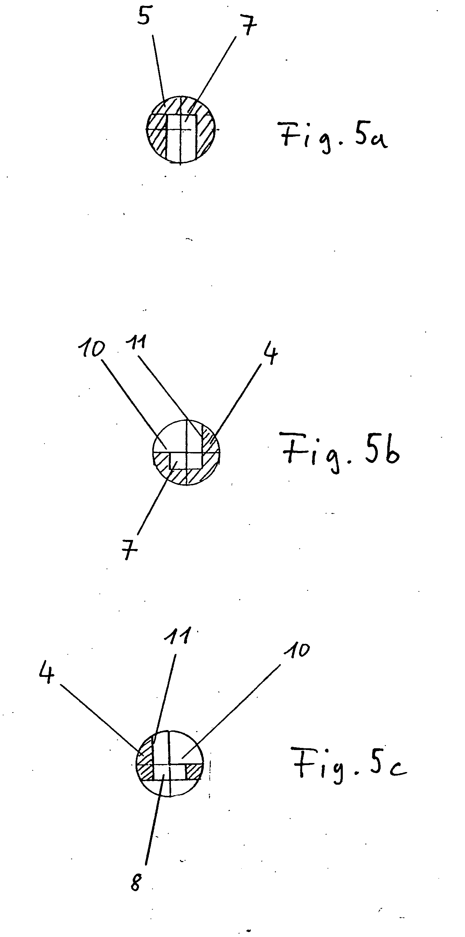

In Fig. 5 ist ferner eine Aufsicht einer dritten Ausführungsform des Rostes des erfindungsgemässen zerlegbaren Grills dargestellt, in der insbesondere ein erstes und ein zweites stabförmiges Seitenteil 4, 5 gezeigt ist. Gemäss Fig. 3a, 3b und Fig. 5 umfasst das erste stabförmige Seitenteil 4 und allgemein auch das zweite stabförmige Seitenteil 5 jeweils ein oder mehrere durchgehende Löcher 8 zur Durchführung eines Stabes 6. Ein durch ein solches durchgehendes Loch 8 durchführbarer Stab 6 weist gemäss Fig. 5 an seinen Enden jeweils ein Gewinde 9 auf. Beim Zusammenbau des Rostes 3 wird ein Stab 6 sowohl durch ein durchgehendes Loch 8 des ersten stabförmigen Seitenteils 4 als auch durch ein durchgehendes Loch 8 des zweiten stabförmigen Seitenteils 5 geführt. Vorzugsweise ist der Stab 6 mit dem Gewinde 9 jeweils an seinen Enden länger als die Stäbe 6, welche in die Sacklöcher 7 beim Zusammenbau des Rostes 3 eingesteckt werden, wobei jedes Ende des Stabes 6 mit dem Gewinde 9 jeweils an seinen Enden gemäss Fig. 5 an der jeweiligen Öffnung des zugehörigen durchgehenden Loches 8 herausragt, welche den übrigen, den Rost 3 bildenden Stäben 6 abgewandt ist. Mittels einer Schraubenmutter, Rändelmutter oder, wie in Fig. 5 gezeigt, mittels einer Flügelmutter, die auf das jeweilige Gewinde 9 des Stabes 6 mit dem Gewinde 9 jeweils an seinen Enden geschraubt ist und sich jeweils auf der den Rost 3 bildenden Stäben 6 abgewandten Seite des ersten und zweiten stabförmigen Seitenteils 4, 5 abstützt, ist es vorteilhaft möglich, den Rost 3 in sich zu verspannen und dadurch die im zusammengebauten Zustand in die Sacklöcher 7 eingesteckten Stäbe 6 zu fixieren. Wie in Fig. 5 weiterhin gezeigt, erstrecken sich das oder die durchgehenden Löcher 8 des ersten stabförmigen Seitenteils 4 im wesentlichen senkrecht zur Längsausdehnungsrichtung X des ersten stabförmigen Seitenteils 4. Ferner erstrecken sich nach Fig. 5 das oder die durchgehenden Löcher 8 des zweiten stabförmigen Seitenteils 5 ebenfalls im wesentlichen senkrecht zur Längsausdehnungsrichtung X des zweiten stabförmigen Seitenteils 5, wobei das oder die durchgehenden Löcher 8 des ersten stabförmigen Seitenteils 4 in der Reihe der Sacklöcher 7 des ersten stabförmigen Seitenteils 4 angeordnet sind und wobei das oder die durchgehenden Löcher 8 des zweiten stabförmigen Seitenteils 5 in der Reihe der Sacklöcher 7 des zweiten stabförmigen Seitenteils 5 angeordnet sind. Im Falle nur eines durchgehenden Loches 8 des ersten stabförmigen Seitenteils 4 ist das durchgehende Loch 8 vorzugsweise im Bereich der Mitte des ersten stabförmigen Seitenteils 4 angeordnet. Im Falle nur eines durchgehenden Loches 8 des zweiten stabförmigen Seitenteils ist das durchgehende Loch 8 ebenfalls im Bereich der Mitte des zweiten stabförmigen Seitenteils 5 angeordnet. Dadurch wird bei jeweils nur einem durchgehenden Loch 8 pro stabförmigem Seitenteil 4, 5 möglich, den Rost 3 in sich optimal zu verspannen und dadurch die im zusammengebauten Zustand in die Sacklöcher 7 eingesteckten Stäbe 6 zu fixieren. Im Falle zweier durchgehender Löcher 8 des ersten stabförmigen Seitenteils ist das eine durchgehende Loch 8 vorzugsweise im Bereich eines Endes und das andere durchgehende Loch 8 im Bereich des anderen Endes des ersten stabförmigen Seitenteils 4 angeordnet. Ferner ist im Falle zweier durchgehender Löcher 8 des zweiten stabförmigen Seitenteils 5 das eine durchgehende Loch 8 im Bereich eines Endes und das andere durchgehende Loch 8 im Bereich des anderen Endes des zweiten stabförmigen Seitenteils 5 angeordnet. Durch die zwei durchgehenden Löcher 8 pro stabförmigem Seitenteil 4, 5, ist vorteilhaft eine verbesserte Verspannung des Rostes 3 in sich und damit eine bessere Fixierung der im zusammengebauten Zustand in die Sacklöcher 7 eingesteckten Stäbe 6 ermöglicht.

Der vorstehend beschriebene Zusammenbau des Rostes 3 anhand von Fig. 5 und den dabei erwähnten Vorteilen ergibt sich sinngemäss für den Fachmann auch bei einem Rost 3 mit einem ersten stabförmigen Seitenteil 4 gemäss Fig. 3a und einem diesem ersten stabförmigen Seitenteil 4 nach Fig. 3a entsprechenden zweiten stabförmigen Seitenteil 5.

Es sei darauf hingewiesen, dass bei den in Fig. 3a und Fig. 5 gezeigten Ansichten der Übersichtlichkeit halber nicht alle Sacklöcher 7 und insbesondere nicht alle durchgehenden Löcher 8 der stabförmigen Seitenteile 4, 5 dargestellt sind. Ferner sind die Stäbe 6 bei der Ansicht nach Fig. 5 nur als Teilansicht gezeigt.

Gemäss Fig. 3a öffnet die Ausnehmung 10 des ersten und/oder zweiten stabförmigen Seitenteils 4, 5 das jeweilige Sackloch 7 im wesentlichen senkrecht zur Ausdehnungsrichtung Y des Sackloches 7 teilweise. Vorzugsweise ist an mindestens einem Teil der durchgehenden Löcher 8 des ersten stabförmigen Seitenteils 4 gemäss Fig. 3a und auch an mindestens einem Teil der durchgehenden Löcher 8 des zweiten stabförmigen Seitenteils 5 eine Ausnehmung 10 vorgesehen, welche das jeweilige durchgehende Loch 8 im wesentlichen senkrecht zur Ausdehnungsrichtung Y des jeweiligen durchgehenden Loches 8 teilweise öffnet. Mittels der vorstehend beschriebenen teilweisen Öffnung des jeweiligen Sackloches 7 und des jeweiligen durchgehenden Loches 8 kann eine weitere Erleichterung der Einführung der Stäbe 6 erreicht werden. Es hat sich als besonders vorteilhaft erwiesen, die jeweilige Ausnehmung 10, wie beispielhaft in Fig. 3a gezeigt, als Kegelsenkung auszubilden, da eine solche Kegelsenkung sehr einfach und schnell, beispielsweise mittels eines Senkbohrers- oder fräsers, hergestellt werden kann.

In Fig. 5a ist eine Schnittdarstellung entlang der Linie b-b der Aufsicht des Rostes 3 gemäss Fig. 5, d.h. an einem Sackloch 7 des zweiten stabförmigen Seitenteils 5, gezeigt. Darüber hinaus ist in Fig. 5b eine Schnittdarstellung entlang der Linie a-a der Aufsicht des Rostes 3 gemäss Fig. 5, d.h. an einem Sackloch 7 des ersten stabförmigen Seitenteils 4, dargestellt. Zudem ist in Fig. 5c eine Schnittdarstellung entlang der Linie c-c der Aufsicht des Rostes 3 gemäss Fig. 5, d.h. an einem durchgehenden Loch 8 des ersten stabförmigen Seitenteils 4, gezeigt. Gemäss Fig. 5, Fig. 5b und Fig. 5c erstreckt sich die Ausnehmung 10 mit im wesentlichen kreissegmentförmigem Profil entlang der Längsausdehnungsrichtung X des ersten stabförmigen Seitenteils 4, wobei die Ausnehmung 10 die zugehörigen Sacklöcher 7 des ersten stabförmigen Seitenteils 4 im wesentlichen senkrecht zur Sacklochausdehnungsrichtung Y und das oder die zugehörigen durchgehenden Löcher 8 im wesentlichen senkrecht zur Ausdehnungsrichtung Y des jeweiligen durchgehenden Loches 8 teilweise öffnet. Es ist aber allgemein auch denkbar, dass sich jeweils eine solche Ausnehmung 10 mit im wesentlichen kreissegmentförmigem Profil entlang der Längsausdehnungsrichtung X des ersten stabförmigen Seitenteils 4 und/oder des zweiten stabförmigen Seitenteils 5 erstreckt, wobei dann die jeweilige Ausnehmung 10 die zugehörigen Sacklöcher 7 im wesentlichen senkrecht zur Sacklochausdehnungsrichtung Y und das oder die zugehörigen durchgehenden Löcher 8 im wesentlichen senkrecht zur Ausdehnungsrichtung Y des jeweiligen durchgehenden Loches 8 teilweise öffnet. Die geöffneten Teile der jeweiligen Sacklöcher 7 und des oder der jeweiligen durchgehenden Löcher 8 bilden Stabführungsnuten 11. Durch die so gebildeten Stabführungsnuten 11 lassen sich die Stäbe 6 beim Zusammenbau des erfindungsgemässen zerlegbaren Grills vorteilhaft sehr einfach und schnell in die vorgesehenen Sacklöcher 7 und in das oder die durchgehende Löcher 8 des ersten und zweiten stabförmigen Seitenteils 4, 5 einstecken, da jeder Stab 6 beim Einstecken durch die jeweilige Stabführungsnut 11 zum zugehörigen Sackloch 7 oder durchgehenden Loch 8 geführt wird.

Nachfolgend wird nun näher auf die bereits erwähnte räumliche Darstellung des ersten stabförmigen Seitenteils 4 der zweiten Ausführungsform des Rostes 3 des erfindungsgemässen zerlegbaren Grills gemäss Fig. 4a und Fig. 4b näher eingegangen. Gemäss Fig. 4a weist das erste stabförmige Seitenteil 4 und allgemein auch das zweite stabförmige Seitenteil 5 jeweils mindestens ein zu einem der ersten Löcher 7a zugeordnetes zweites Loch 8a auf, welches zweite Loch 8a fluchtend zu dem zugeordneten ersten Loch 7a vom Innenbereich durch die Aussenwand des Hohlprofils angeordnet ist. Ein durch das erste Loch 7a und anschliessend durch das diesem ersten Loch 7a zugeordnete zweite Loch 8a durchführbarer Stab 6 weist an seinen Enden jeweils ein Gewinde 9 auf. Beim Zusammenbau des Rostes 3 wird ein solcher Stab 6 sowohl durch ein erstes und zweites Loch 7a, 8a des ersten stabförmigen Seitenteils 4 als auch durch ein erstes und zweites Loch 7a, 8a des zweiten stabförmigen Seitenteils 5 geführt. Vorzugsweise ist der Stab 6 mit dem Gewinde 9 jeweils an seinen Enden länger als die Stäbe 6, welche in die ersten Löcher 7a ohne zugeordnete zweite Löcher 8a beim Zusammenbau des Rostes 3 eingesteckt werden, wobei jedes Ende des Stabes 6 mit dem Gewinde 9 jeweils an seinen Enden an der jeweiligen Öffnung des zugehörigen zweiten Loches 8a herausragt, welche den übrigen, den Rost 3 bildenden Stäben 6 abgewandt ist. Mittels einer Schraubenmutter, Rändelmutter mittels einer Flügelmutter, die auf das jeweilige Gewinde 9 des Stabes 6 mit dem Gewinde 9 jeweils an seinen Enden geschraubt ist und sich jeweils auf der den Rost 3 bildenden Stäben 6 abgewandten Seite des ersten und zweiten stabförmigen Seitenteils 4, 5 abstützt, ist es mit Vorteil möglich, den Rost 3 in sich zu verspannen und dadurch die im zusammengebauten Zustand in die ersten Löcher 7a ohne zugeordnete zweite Löcher 8a eingesteckten Stäbe 6 zu fixieren. Wie in Fig. 4a, 4b weiterhin gezeigt, erstrecken sich das oder die zweiten Löcher 8a des ersten stabförmigen Seitenteils 4 im wesentlichen senkrecht zur Längsausdehnungsrichtung X des ersten stabförmigen Seitenteils 4. Ferner erstrecken sich allgemein das oder die zweiten Löcher 8a des zweiten stabförmigen Seitenteils 5 ebenfalls im wesentlichen senkrecht zur Längsausdehnungsrichtung X des zweiten stabförmigen Seitenteils 5. Im Falle nur eines ersten Loches 7a mit einem zugeordneten zweiten Loch 8a des ersten stabförmigen Seitenteils 4 ist das erste Loch 7a mit dem zugeordneten zweiten Loch 8a vorzugsweise im Bereich der Mitte des ersten stabförmigen Seitenteils 4 angeordnet. Im Falle nur eines ersten Loches 7a mit einem zugeordneten zweiten Loch 8a des zweiten stabförmigen Seitenteils ist das erste Loch 7a mit dem zugeordneten zweiten Loch 8a ebenfalls im Bereich der Mitte des zweiten stabförmigen Seitenteils 5 angeordnet. Dadurch wird es bei jeweils nur einem ersten Loch 7a mit einem zugeordneten zweiten Loch 8a pro stabförmigem Seitenteil 4, 5 möglich, den Rost 3 in sich optimal zu verspannen und dadurch die im zusammengebauten Zustand in die ersten Löcher 7a ohne zugeordnete zweite Löcher 8a eingesteckten Stäbe 6 zu fixieren. Im Falle zweier erster Löcher 7a mit zugeordneten zweiten Löchern 8a des ersten stabförmigen Seitenteils ist das eine erste Loch 7a mit zugeordnetem zweiten Loch 8a vorzugsweise im Bereich eines Endes und das andere erste Loch 7a mit zugeordnetem zweiten Loch 8a im Bereich des anderen Endes des ersten stabförmigen Seitenteils 4 angeordnet. Ferner ist im Falle zweier erster Löcher 7a mit zugeordneten zweiten Löchern 8a des zweiten stabförmigen Seitenteils 5 das eine erste Loch 7a mit zugeordnetem zweiten Loch 8a im Bereich eines Endes und das andere erste Loch 7a mit zugeordnetem zweiten Loch 8a im Bereich des anderen Endes des zweiten stabförmigen Seitenteils 5 angeordnet. Durch die zwei ersten Löcher 7a mit zugeordneten zweiten Löchern 8a pro stabförmigem Seitenteil 4, 5, ist vorteilhaft eine verbesserte Verspannung des Rostes 3 in sich und damit eine bessere Fixierung der im zusammengebauten Zustand in die ersten Löcher 7a ohne zugeordnete zweite Löcher 8a eingesteckten Stäbe 6 ermöglicht.

Gemäss Fig. 4a öffnet die Ausnehmung 10 das jeweilige erste Loch 7a im wesentlichen senkrecht zur Ausdehnungsrichtung Y des ersten Lochs 7a teilweise. Mittels der vorstehend beschriebenen teilweisen Öffnung des jeweiligen ersten Loches 7a kann eine weitere Erleichterung der Einführung der Stäbe 6 erreicht werden. Es hat sich als besonders vorteilhaft erwiesen, die jeweilige Ausnehmung 10, wie beispielhaft in Fig. 4a gezeigt, als Kegelsenkung auszubilden, da eine solche Kegelsenkung sehr einfach und schnell, beispielsweise mittels eines Senkbohrers- oder fräsers, hergestellt werden kann.

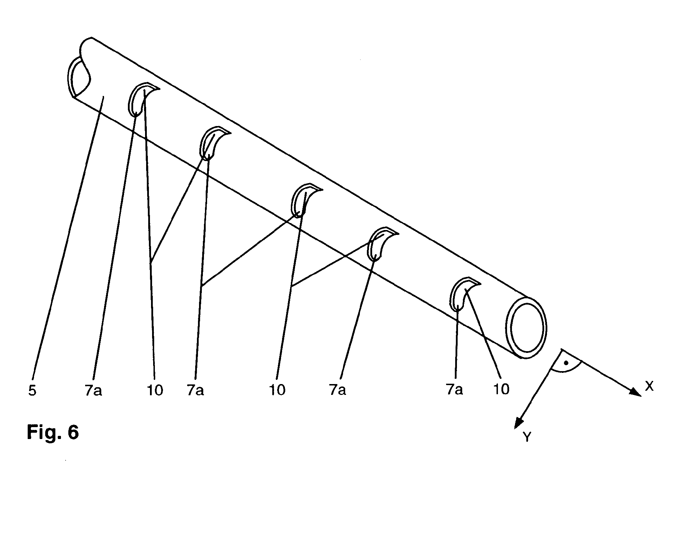

Bei einer in Fig. 6 gezeigten räumlichen Darstellung des zweiten stabförmigen Seitenteils 5 einer vierten Ausführungsform des Rostes 3 des erfindungsgemässen zerlegbaren Grills erweitert die Ausnehmung 10 im Unterschied zu einem dem ersten stabförmigen Seitenteil 4 gemäss Fig. 3a oder Fig. 4a entsprechenden zweiten stabförmigen Seitenteil 5 das jeweilige erste Loch 7a auf einem Teilstück der Aussenwand senkrecht zur Längsausdehnungsrichtung X des zweiten stabförmigen Seitenteils 5. Jedes erste Loch 7a ist gemäss Fig. 6 demnach in der Art eines Langloches auf einem Teilstück der Aussenwand senkrecht zur Längsausdehnungsrichtung X des zweiten stabförmigen Seitenteils 5 ausgebildet. Zur Bildung eines Rostes 3 kann neben dem zweiten Seitenteil 5 gemäss Fig. 6 nun das erste stabförmige Seitenteil 4 nach sämtlichen vorstehend im Detail beschriebenen Ausführungsformen gemäss Fig. 3a, Fig. 4a oder Fig. 5 ausgebildet sein. Beim Zusammenbau des Rostes 3 wird dann zuerst ein Stab 6 mit dem bereits angesprochenen Gewinde 9 sowohl durch ein durchgehendes Loch 8 gemäss Fig. 3a oder Fig. 5 beziehungsweise durch ein erstes und zweites Loch 7a, 8a gemäss Fig. 4a des ersten stabförmigen Seitenteils 4 als auch durch ein erstes und zweites Loch 7a, 8a des zweiten stabförmigen Seitenteils 5 gemäss Fig. 6 geführt und danach mittels einer Schraubenmutter, Rändelmutter oder mittels einer Flügelmutter ähnlich der bereits beschriebenen Weise leicht fixiert. Bei mehreren durchgehenden Löchern 8 beziehungsweise mehreren ersten Löchern 7a mit zugeordneten zweiten Löchern 8a wird dieser Vorgang entsprechend oft durchgeführt. Danach werden dann die Stäbe 6 in die Sacklöcher 7 gemäss Fig. 3a oder Fig. 5 beziehungsweise in die ersten Löcher 7a ohne zugeordnete zweite Löcher 8a gemäss Fig. 4a des ersten stabförmigen Seitenteils 4 eingeführt. Diese Stäbe 6 müssen dann lediglich noch in die jeweilige Ausnehmung 10 gemäss Fig. 6 des zweiten stabförmigen Seitenteils 5 von oben, d.h. senkrecht zur Längsausdehnungsrichtung X des zweiten stabförmigen Seitenteils 5 und senkecht zur Ausdehnungsrichtung Y der jeweiligen ersten Löcher 7a, eingelegt werden. Schliesslich werden die Schraubenmuttern, Rändelmuttern oder Flügelmuttern festgezogen um den Rost 3, insbesondere die Stäbe 6, in sich zu verspannen und dadurch zu fixieren. Durch die gemäss Fig. 6 gebildete Ausnehmung 10 des zweiten stabförmigen Seitenteils 5 lassen sich die Stäbe 6 beim Zusammenbau des erfindungsgemässen zerlegbaren Grills vorteilhaft noch einfacher und schneller mit den beiden stabförmigen Seitenteilen 4, 5 zu dem Rost 3 zusammenfügen.

Die Stäbe 6 und das erste stabförmige Seitenteil 4 und das zweite stabförmige Seitenteil 5 bestehen vorzugsweise aus einer Edelstahllegierung oder aus Aluminium oder einer Aluminiumlegierung, welche eine weitestgehende Rostfreiheit auch bei längerem Aufenthalt des Rostes 3 selbst in einer feuchten oder nassen Umgebung gewährleistet und somit die Lebensdauer des Rostes 3 verlängert. Zudem bleiben solche ausgeführten Stäbe 6 und das erste und zweite stabförmige Seitenteil 4, 5 auch unter hoher thermischer Beanspruchung, wie sie beim Einsatz eines Grills gängigerweise durch ein Grillfeuer unter dem Rost 3 vorliegt, aber auch unter mechanischer Beanspruchung sowohl im zerlegten als auch im zusammengebauten Zustand des Rostes 3 weitestgehend formtreu.

### Bezugszeichenliste

- 1: Rosthalteeinrichtung
- 2: Stangenförmige Halterung
- 3: Rost
- 4: erstes stabförmiges Seitenteil
- 5: zweites stabförmiges Seitenteil
- 6: Stab
- 7: Sackloch
- 7a: erstes Loch
- 8: durchgehendes Loch
- 8a: zweites Loch
- 9: Gewinde
- 10: Ausnehmung
- 11: Stabführungsnut
- 12: Abspannanordnung

## Patentansprüche

1. Zerlegbarer Grill mit einer Rosthalteeinrichtung (1), welche mit einer stangenförmigen Halterung (2) verbindbar ausgebildet ist, und mit einem mit der Rosthalteeinrichtung (1) verbindbaren Rost (3), welcher durch ein erstes stabförmiges Seitenteil (4) und ein zweites stabförmiges Seitenteil (5) und durch eine Vielzahl zwischen dem ersten stabförmigen Seitenteil (4) und dem zweiten stabförmigen Seitenteil (5) angeordneten Stäben (6) gebildet ist, wobei die Stäbe (6) mit dem ersten stabförmigen Seitenteil (4) und mit dem zweiten stabförmigen Seitenteil (5) lösbar verbunden sind, **dadurch gekennzeichnet, dass** das erste stabförmige Seitenteil (4) und das zweite stabförmige Seitenteil (5) jeweils ein Hohlprofil aufweisen, und
dass das erste stabförmige Seitenteil (4) und das zweite stabförmige Seitenteil (5) jeweils eine Vielzahl an ersten Löchern (7a) durch die Aussenwand in den Innenbereich des Hohlprofils zur Aufnahme zumindest eines Teils der Stäbe (6) aufweist und bei mindestens einem Teil der ersten Löcher (7a) des ersten stabförmigen Seitenteils (4) und/oder des zweiten stabförmigen Seitenteils (5) eine Ausnehmung (10) vorgesehen ist, welche die ersten Löcher (7a) an der Aussenwand teilweise öffnet.

2. Zerlegbarer Grill nach Anspruch 1, **dadurch gekennzeichnet, dass** das erste stabförmige Seitenteil (4) und das zweite stabförmige Seitenteil (5) jeweils mindestens ein zu einem der ersten Löcher (7a) zugeordnetes zweites Loch (8a) aufweist, welches zweite Loch (8a) fluchtend zu dem zugeordneten ersten Loch (7a) vom Innenbereich durch die Aussenwand des Hohlprofils angeordnet ist.

3. Zerlegbarer Grill nach Anspruch 1 oder 2, **dadurch gekennzeichnet, dass** die Ausnehmung (10) das jeweilige erste Loch (7a) im wesentlichen senkrecht zur Ausdehnungsrichtung (Y) des ersten Lochs (7a) teilweise öffnet.

4. Zerlegbarer Grill nach Anspruch 1 oder 2, **dadurch gekennzeichnet, dass** das Hohlprofil einen kreisförmigen Querschnitt aufweist, und
dass beim zweiten stabförmigen Seitenteil (5) die Ausnehmung (10) das jeweilige erste Loch (7a) auf einem Teilstück der Aussenwand senkrecht zur Längsausdehnungsrichtung (X) des zweiten stabförmigen Seitenteils (5) erweitert.

5. Zerlegbarer Grill mit einer Rosthalteeinrichtung (1), welche mit einer stangenförmigen Halterung (2) verbindbar ausgebildet ist, und mit einem mit der Rosthalteeinrichtung (1) verbindbaren Rost (3), welcher durch ein erstes stabförmiges Seitenteil (4) und ein zweites stabförmiges Seitenteil (5) und durch eine Vielzahl zwischen dem ersten stabförmigen Seitenteil (4) und dem zweiten stabförmigen Seitenteil (5) angeordneten Stäben (6) gebildet ist, wobei die Stäbe (6) mit dem ersten stabförmigen Seitenteil (4) und mit dem zweiten stabförmigen Seitenteil (5) lösbar verbunden sind, **dadurch gekennzeichnet, dass** das erste stabförmige Seitenteil (4) und das zweite stabförmige Seitenteil (5) jeweils eine Vielzahl an Sacklöchern (7) zur Aufnahme zumindest eines Teils der Stäbe (6) aufweist und bei mindestens einem Teil der Sacklöcher (7) des ersten stabförmigen Seitenteils (4) und/oder des zweiten stabförmigen Seitenteils (5) eine Ausnehmung (10) vorgesehen ist, welche die Sacklöcher (7) an deren Eingang teilweise öffnet.

6. Zerlegbarer Grill nach Anspruch 1, **dadurch gekennzeichnet, dass** das erste stabförmige Seitenteil (4) und das zweite stabförmige Seitenteil (5) jeweils ein oder mehrere durchgehende Löcher (8) zur Durchführung eines Stabes (6) umfasst.

7. Zerlegbarer Grill nach Anspruch 1 oder 2, **dadurch gekennzeichnet, dass** die Ausnehmung (10) das jeweilige Sackloch (7) im wesentlichen senkrecht zur Ausdehnungsrichtung (Y) des Sackloches (7) teilweise öffnet.

8. Zerlegbarer Grill nach Anspruch 2, **dadurch gekennzeichnet, dass** an mindestens einem Teil der durchgehenden Löcher (8) eine Ausnehmung (10) vorgesehen ist, welche das jeweilige durchgehende Loch (8) im wesentlichen senkrecht zur Ausdehnungsrichtung (Y) des jeweiligen durchgehenden Loches (8) teilweise öffnet.

9. Zerlegbarer Grill nach Anspruch 2, **dadurch gekennzeichnet, dass** sich die Ausnehmung (10) mit im wesentlichen kreissegmentförmigem Profil entlang der Längsausdehnungsrichtung (X) des ersten stabförmigen Seitenteils (4) und/oder des zweiten stabförmigen Seitenteils (5) erstreckt, und
dass die jeweilige Ausnehmung (10) die zugehörigen Sacklöcher (7) im wesentlichen senkrecht zur Sacklochausdehnungsrichtung (Y) und das oder die zugehörigen durchgehenden Löcher (8) im wesentlichen senkrecht zur Ausdehnungsrichtung (Y) des jeweiligen durchgehenden Loches (8) teilweise öffnet.

10. Zerlegbarer Grill nach einem der Ansprüche 3, 7 oder 8, **dadurch gekennzeichnet, dass** die jeweilige Ausnehmung (10) als Kegelsenkung ausgebildet ist.

11. Zerlegbarer Grill nach einem der vorhergehenden Ansprüche, **dadurch gekennzeichnet, dass** die stangenförmige Halterung (2) mindestens zweiteilig ausgebildet ist, wobei die Teile der stangenförmigen Halterung (2) durch Stecken verbindbar sind.

12. Zerlegbarer Grill nach Anspruch 11, **dadurch gekennzeichnet, dass** die Teile der stangenförmigen Halterung (2) jeweils ein Hohlprofil mit einem kreisförmigen Querschnitt aufweisen.

13. Zerlegbarer Grill nach Anspruch 11 oder 12, **dadurch gekennzeichnet, dass** die stangenförmige Halterung (2) durch eine Abspannanordnung (12) bezüglich einer Bodenoberfläche fixierbar ausgebildet ist.

14. Zerlegbarer Grill nach einem der vorhergehenden Ansprüche, **dadurch gekennzeichnet, dass** die Rosthalteeinrichtung (1) ein Hohlprofil aufweist und
dass die Rosthalteeinrichtung (1) als Aufnahmevorrichtung der Stäbe (6) im zerlegten Zustand des Rostes (3) ausgebildet ist.
